## Europäisches Patentamt

## European Patent Office

## Office européen des brevets

(19)

(11) Publication number: **0 335 276**

**A1**

(12) # EUROPEAN PATENT APPLICATION

(21) Application number: **89105304.3**

(22) Date of filing: **23.03.89**

(51) Int. Cl.4: **C08G 18/65 , C08G 18/66**

(30) Priority: **28.03.88 US 173904**

(43) Date of publication of application:
**04.10.89 Bulletin 89/40**

(84) Designated Contracting States:
**BE DE FR GB IT NL SE**

(71) Applicant: **THE DOW CHEMICAL COMPANY**
**2030 Dow Center Abbott Road P.O. Box 1967**
**Midland Michigan 48640-1967(US)**

(72) Inventor: **Anand, Joginder N.**
**30 Mountaire Place**
**Clayton CA 94517(US)**
Inventor: **Collins, Guy R.**
**2504 Abbott Road, Apt. 03**
**Midland MI 48640(US)**

(74) Representative: **Henkel, Feiler, Hänzel &**
**Partner**
**Möhlstrasse 37**
**·D-8000 München 80(DE)**

(54) **Modulus modified aliphatic thermoplastic polyurethanes.**

(57) Disclosed are novel thermoplastic polyurethanes capable of being produced in a range of physical properties. The novel feature resides in the combination of a minor amount of a polyol with a particular difunctional isocyanate reactive compound having a molecular weight of from 350 to 550 and itself being present in minor proportions, in reaction with an organic polyisocyanate and a conventional extender.

One of the advantageous features is that polymer properties can be altered particularly to higher modulus values without requiring an increase in conventional extender concentration. This means that the expensive isocyanate component need not be increased in order to toughen the plastic.

**EP 0 335 276 A1**

## MODULUS MODIFIED ALIPHATIC THERMOPLASTIC POLYURETHANES

This invention relates to thermoplastic polyurethanes and is more particularly concerned with thermoplastic polyurethanes whose modulus properties can be increased without resorting to an increase in conventional hard segment components.

U.S. Patents 4,376,834 and 4,567,236 introduced novel classes of polyurethane polymers to the plastics molding art. These materials are characterized by high impact resistance, stiffness, and other structural strength properties similar to nylon and other engineering thermoplastics. Their structural strength properties are derived from two key polymer composition characteristics, namely a very low polyol content and a very high equivalent ratio of extender to polyol. It will be understood by one skilled in the art that such polyurethane elastomers are prototypical of segmented block copolymers. The soft segments are composed of the long chain polyol residues while the hard segments are formed preferably from diisocyanates and a short chain diol extender, typically butanediol. This type of polymer construction calls for very high proportions of the diisocyanate reactant because it is not unusual for extender to polyol ratios to exceed 60:1 and oftentimes 70 and 80:1. Because the diisocyanate component is the most expensive ingredient, its high consumption level results in the prior art polyurethanes being relatively expensive. This expense factor becomes even more critical when the isocyanate required is an aliphatic or cycloaliphatic diisocyanate because they require the highest extender to polyol ratios to achieve their maximum structural strength properties.

It will be noted in the art cited above that the extender molecular weights fall in a range of from 50 to 400, while the polyols are from 500 to 20,000. These are conventional molecular weight ranges in respect of such ingredients. Typically, U.S. Patent 3,963,679 calls for glycol extender molecular weights up to 300 and polyol weights of 500 to 10,000, although extender weight can be raised to 500 when trifunctional extenders are used; U.S. Patent 4,317,890 calls for extender molecular weights up to 380 with polyol weights of 400 to 10,000; U.S. Patent 4,342,847 calls for extenders below 400. Generally speaking, the art has ignored difunctional ingredients falling within a narrow molecular weight range of the order of 350 to 550 when contemplating the preparation of thermoplastic polyurethanes.

It would be most advantageous if polyurethane polymers could be provided with the ability to modify and increase their structural strength properties without resorting to very high extender/polyol equivalent ratios. This ability to increase stiffness and the like in those polyurethanes based on aliphatic or cycloaliphatic diisocyanates would be particularly attractive.

This invention is directed to thermoplastic polyurethanes and process therefor which comprise the products of reaction of

(a) an organic polyisocyanate;

(b) an organic polyol having a molecular weight from 1,000 to 12,000;

(c) a difunctional isocyanate reactive compound having a molecular weight of from 350 to 550; and

(d) at least one chain extender having a functionality from 2 to 3;

said polyurethanes and process being characterized in that the proportions by weight of said polyol (b) and said difunctional compound (c) are from 4 to 40 and from 5 to 30 percent respectively based on the combined weights of said (a), (b), (c), and (d) and provided the proportions of said four ingredients are such that the overall ratio of isocyanate groups to active hydrogen groups falls in the range of from 0.90:1 to 1.15:1.

The term "difunctional isocyanate reactive compound" means any organic compound having two active hydrogen moieties capable of reacting with isocyanate and having the number average molecular weight set forth above. Illustrative of groups containing active hydrogen moieties are -COOH, -OH, -NH$_2$, -SH, =NH, -CONH$_2$, and -CONH-.

The objectives discussed above have been realized in the polyurethanes of this invention. Quite unexpectedly, replacement of a portion of the already small content of organic polyol of the prior art formulations by a difunctional isocyanate reactive compound (c) defined above results in polymer property modifications one would expect only when conventional hard segments are increased. This is readily accomplished without any increase in the polyisocyanate consumption. That is to say, modulus properties can be increased to levels which heretofore required much higher ratios of conventional extender to polyol. While conventional extenders must be retained, their relative proportions are decreased compared to the prior art.

The unexpected results arising from the present invention take on added significance when the polymers are based on aliphatic or cycloaliphatic diisocyanates simply because of the prior art difficulties in providing such polyurethanes with high modulus properties.

The polyurethanes of the invention can be prepared using any of the methods currently employed in the polyurethane art for bringing together, in the presence or absence of solvents, polyisocyanates, extenders, and high molecular weight polyols. This includes manual or mechanical mixing means and is inclusive of casting, reaction extrusion, and reaction injection molding. For typical preparative methods see U.S. Patents 3,642,964, 4,376,834 and 4,567,236. Included in the preparative methods is the one-shot procedure and the prepolymer or quasi-prepolymer techniques.

Preferably, the individual components are rendered substantially free from the presence of extraneous moisture using conventional procedures, for example, by heating under reduced pressure at a temperature above the boiling point of water at the pressure employed. The mixing of the reactants can be carried out at ambient temperature (i.e. of the order of 20°C to 25°C) and the resulting mixture is then generally heated to a temperature of the order of 30°C to 175°C preferably to a temperature of 50°C to 100°C. Exact temperatures employed and variations thereof will depend on the reactivity of the isocyanate component and whether one-shot or prepolymer reactions are involved. However, these are conventional aspects of carrying out the invention which are well within the grasp of one skilled in this art. Advantageously and preferably, one or more of the reactants is preheated to a temperature within the above ranges before the admixing is carried out. Advantageously, in a batch procedure, the heated reaction components, prior to admixture, are subjected to degassing in order to remove entrained bubbles of air or other gases before the reaction takes place. This is accomplished conveniently by reducing the pressure under which the components are maintained until no further evolution of bubbles occurs. The degassed reaction components are then admixed and transferred to suitable trays, molds, extruders, flexible belts and the like and allowed to react and cure at temperatures of the order of ambient temperature to 250°C. Pressure may also be applied during the curing reaction. The time required for curing will vary according to the temperature and also with the nature of the particular composition. The time required in any given case can be determined by a process of trial and error.

It is frequently desirable, particularly where aliphatic or cycloaliphatic isocyanates are concerned, to include a catalyst in the reaction mixture. Any of the catalysts conventionally employed in the art to catalyze the reaction of an isocyanate with a reactive hydrogen containing compound can be employed for this purpose. A detailed listing of such catalysts is to be found, for example, in U.S. Patent 4,202,957 at column 5, lines 45 to 67. A preferred catalyst group includes the organotin catalysts such as stannous octoate, dibutyltin dioctoate, dibutyltin dilaurate, and the like. The amount of catalyst employed is generally employed within the range of 0.02 to 2.0 percent by weight based on the total weight of the reactants. In a particular embodiment of the one-shot procedure the reaction is carried out on a continuous basis using apparatus and procedures such as that which is disclosed in U.S. Patent 3,642,964 cited supra.

The compositions of the invention are thermoplastic and injection-moldable. Generally speaking, difunctional reactants are preferred such as diisocyanates and difunctional extenders, although there are certain exceptions which will be discussed below. Polyol functionalities enjoy wider latitudes where the weight proportion employed is in a low range. Since the amount by weight of the polyol can be relatively small, it is possible to employ such components having functionalities greater than two without detracting from the thermoplasticity of the resulting product. However, there is a limit of the degree to which the functionality of the polyol can be increased without losing the thermoplastic properties in the resulting product. As will be recognized by one skilled in the art, this limit will vary according to the nature of the polyol, its molecular weight, and the amount in which it is used. In general, the higher the molecular weight of the polyol the higher the functionality which can be employed without losing the thermoplastic properties in the polyurethane product.

The novel and distinguishing feature of the present polymers resides both in the replacement of a portion of the polyol component by a difunctional isocyanate reactive compound (c) defined above and in the specific weight proportions in which both ingredients must be employed in respect of the combined weight of (a) polyisocyanate, (b) polyol, (c) difunctional compound, and (d) chain extender. Advantageously, (b) falls within the range of 4 to 40 percent by weight when (c) is from 5 to 30 percent. Preferably, the ranges are 10 to 35 percent and 10 to 25 percent respectively; most preferably the ranges are 10 to 30 percent and 10 to 20 percent respectively. Generally speaking, these ranges are governed by an inverse relationship to each other. That is to say, when operating at the lower end of the range of one component the other component is at its higher end and vice versa. However, one skilled in the art will recognize that exceptions to this can readily occur depending on the polyol molecular weight, and, more importantly, on the polymer properties desired.

It will be immediately recognized that the molecular weight of the difunctional isocyanate reactive compound (c) falls within a very narrow and precise range as defined above, preferably this range is from 400 to 500 number average molecular weight. While the weight range may be narrow, the choice of the actual difunctional groups is not. As noted above, any organic compound having two groups each capable of reacting with isocyanate by virtue of an active hydrogen is useful as a component (c) so long as its molecular weight falls within the required ranges, and, preferably, the two groups are terminal in the molecule with respect to each other or at least not on adjacent carbon atoms. Of the active groups illustrated above, -COOH, -NH$_2$ and -OH are preferred with the latter two more preferred, and a diol being most preferred.

Illustrative of such difunctional compounds are polyether glycols such as the polyethylene glycols, polypropylene glycols, and polybutylene glycols having the requisite molecular weight limitations; polyether glycols which are the polymerization products of alkylene oxides such as ethylene oxide, propylene oxide, butylene oxide, and phenyl glycidyl ether with diols such as ethylene glycol, 1,3-propylene glycol, 1,2-propylene glycol, 1,4-butylene glycol, 1,3-butylene glycol, 1,2-butylene glycol, 1,5-pentane diol and 1,4-dihydroxy benzene; polytetramethylene glycols prepared from tetrahydrofuran; alkylene oxide adducts of compounds which contain two different reactive groups such as -NH$_2$ and -OH, or one -OH and one -SH; dihydric thioethers obtained by alkoxylating thiodiglycol; aliphatic and aromatic thiols optionally reacted with alkylene oxides with typical starting materials being 1,2-ethane dithiol, 1,2-propane dithiol, 1,6-hexane dithiol, 2-butene-1,4-dithiol, and 1,4-benzene dithiol; even hydrogen sulfide may be alkoxylated to the requisite molecular weight range; acids and amides optionally reacted on one or both ends by C$_1$ to C$_4$ alkylene oxides, such as hydroxystearic acid, fatty acid alkanol amides, for example lauroyl monoethanolamide, diacids such as adipic, terephthalic, decane-, undecane, and dodecanedioic acids and sulfonamides; diamines optionally reacted with alkylene oxides or else if their inherent molecular weight meets the above limitations as for example with the aliphatic ether diamines as disclosed in U.S. Patent 3,654,370 and exemplified by such products as Jeffamine™ D-400 supplied by Texaco Inc.; alkoxylated methylenedianiline, 2,4-, or 2,6-toluenediamine, ethylene diamine, and 1,4-butylenediamine; polyester diols such as those obtained by esterifying from 0.01 to 0.8 mole of a dicarboxylic acid per mole of a diol with typical acids being isophthalic, terephthalic, malonic, succinic, glutaric, adipic, pimelic, suberic, azelaic, sebacic, undecanedioic, dodecanedioic, and the like and with typical diols of ethylene glycol, 1,3-propylene glycol, 1,2-propylene glycol, 1,4-butylene glycol, 1,6-hexylene glycol, 1,4-cyclohexanedimethanol, 1,4-cyclohexane diol, and the like; polyurethane prepolymers prepared by reacting diisocyanates such as 4,4$'$-methylenebis(phenyl isocyanate) or liquefied forms thereof with at least 2 molar proportions of a diol such as dipropylene glycol, tripropylene glycol, 1,4-butanediol, and 1,6-hexane diol; hydroxyl terminated polycarbonates; and the like.

A preferred group of difunctional compounds comprises the polyalkyleneoxy glycols and polyester diols as exemplified above. A more preferred group includes the polyethylene glycols, and polyester diols obtained by reacting a molar proportion of a C$_9$ to C$_{12}$ aliphatic dicarboxylic acid with up to a two molar proportion of 1,4-cyclohexanedimethanol.

The polyol component (b) falls within the molecular weight range set forth above. The term molecular weight as used herein refers to the number average molecular weight as determined by end-group analysis and other colligative properties. Preferably, the molecular weight falls in the range of from 1,500 to 6,000, more preferably from 1,500 to 3,000. The functionality is advantageously not greater than 6 and, preferably, the functionality falls in a range of 2 to 4. A most preferred class of polyols have functionalities of 2 and a molecular weight of from 1,500 to 3,000.

Exemplary of the polyols which can be employed are: polyether polyols, polyester polyols, hydroxy-terminated polycarbonates, hydroxy-terminated polybutadienes, hydroxy-terminated polybutadiene-acrylonitrile copolymers, hydroxy-terminated copolymers of dialkyl siloxane and alkylene oxides such as ethylene oxide, and propylene oxide, and mixtures in which any of the above polyols are employed as major component (greater than 50 percent by weight) with amine-terminated polyethers and amino-terminated polybutadiene-acrylonitrile copolymers.

Illustrative of polyether polyols are polyoxyethylene glycols, polyoxypropylene glycols, polyoxybutylene glycols which, optionally, have been capped with ethylene oxide residues, random and block copolymers of ethylene oxide, propylene oxide, and butylene oxide, propoxylated tri- and tetrahydric alcohols such as glycerine, trimethylolpropane, and pentaerythritol, which propoxylated compounds have been capped with ethylene oxide; polytetramethylene glycol, random and block copolymers of tetrahydrofuran and ethylene oxide and/or propylene oxide, and products derived from any of the above by reaction with di- or higher functional carboxylic acids or esters derived from said acids in which latter case ester interchange occurs and the esterifying radicals are replaced by polyether polyol radicals. The preferred polyether polyols are random and block copolymers of ethylene and propylene oxide of functionality approximately 2.0 and polytetramethylene glycol polymers.

In a particular embodiment of the invention the polyol can be obtained by reacting any of the above polyether polyols with a di-aliphatic or aromatic carboxylic acid to form the corresponding polyether-esters. Examples of acids which can be used are adipic, azelaic, glutaric, isophthalic, terephthalic, and trimellitic. The polyether polyols which can be employed also include the vinyl reinforced polyether polyols, e.g. those obtained by the polymerization of styrene and or acrylonitrile in the presence of the polyether. Illustrative of polyester polyols are those prepared by polymerizing ε-caprolactone using an initiator such as ethylene glycol, and ethanolamine, and those prepared by esterification of polycarboxylic acids such as phthalic, terephthalic, succinic, glutaric, adipic azelaic acids with polyhydric alcohols such as ethylene glycol, butanediol, glycerol, trimethylolpropane, 1,2,6-hexanetriol, and cyclohexanedimethanol.

Illustrative of the amine-terminated polyethers are the aliphatic primary di- and tri-amines structurally derived from polyoxypropylene glycols and triols. Polyether diamines of this type are available from Jefferson Chemical Company under the trademark JEFFAMINE.

Illustrative of polycarbonates containing hydroxyl groups are those prepared by reaction of diols such as propane-1,3-diol, butane-1,4-diol, hexan-1,6-diol, 1,9-nonanediol, 2-methyloctane-1,8-diol, diethylene glycol, triethylene glycol, and dipropylene glycol with diarylcarbonates such as diphenylcarbonate or with phosgene. ,

Illustrative of the silicon-containing polyethers are the copolymers of alkylene oxides with dialkylsiloxanes such as dimethylsiloxane; see, for example, U.S. Patent No. 4,057,595.

Illustrative of the hydroxy-terminated polybutadiene copolymers are the compounds available under the trade name Poly BD Liquid Resins from Arco Chemical Company. Illustrative of the hydroxy- and amine-terminated butadiene/acrylonitrile copolymers are the materials available under the trade name HYCAR hydroxyl-terminated (HT) Liquid Polymers and amine-terminated (AT) Liquid Polymers, respectively.

The most preferred polyols comprise the preferred random and block polyether diols and polytetramethylene glycols set forth above.

The chain extender component can be any of the difunctional and trifunctional compounds known in the art for extending polyurethane reactions. Generally speaking, their molecular weight fall within a range of from 60 to 300, preferably from 60 to 250. Although not strictly limited to hydroxyl groups, the difunctional hydroxyl extenders are preferred as a class, and most preferred are the aliphatic diols having 2 to 10 carbon atoms.

Illustrative of such extenders are aliphatic straight and branched chain diols having from about 2 to 10 carbon atoms, inclusive, in the chain. Illustrative of such diols are ethylene glycol, 1,3-propanediol, 1,4-butanediol, 1,5-pentanediol, 1,6-hexanediol, 1,2-propanediol, 1,3-butanediol, 2,3-butanediol, 1,3-pentanediol, 1,2-hexanediol, 3-methylpentane-1,5-diol, 1,9-nonanediol, 2-methyloctane-1,8-diol, 1,4-cyclohexanedimethanol, hydroquinone bis(hydroxyethyl)ether, 1,4-cyclohexanediol, and 4,4′-isopropylidenebis-(cyclohexanol) including mixtures of two or more such diols. The extenders, which can be used alone or in admixture with each other or any of the above diols, also include diethylene glycol, dipropylene glycol, and tripropylene glycol, ethanolamine, N-methyl-diethanolamine, and N-ethyl-diethanolamine, as well as ester diols. Trifunctional extenders such as glycerol, and trimethylolpropane can also be employed alone or in admixture with one or more of the above diols.

While any of the diol extenders described and exemplified above can be employed alone, or in admixture, it is preferred to use 1,4-butanediol, 1,6-hexanediol, neopentyl glycol, 1,4-cyclohexanedimethanol, ethylene glycol, and diethylene glycol, either alone or in admixture with each other or with one or more aliphatic diols previously named. Particularly preferred diols are 1,4-butanediol, 1,6-hexanediol and 1,4-cyclohexanedimethanol.

Any of the organic diisocyanates and polyisocyanates previously employed in the preparation of thermoplastic polyurethanes can be employed for the present compositions. To ensure thermoplasticity, the diisocyanates are preferred and the aliphatic and cycloaliphatic diisocyanates, and mixtures thereof are particularly preferred because it is with these materials that some of the more unexpected advantages of the present polymers can be realized.

Illustrative isocyanates but non-limiting thereof are methylenebis(phenyl isocyanate) including the 4,4′-isomer, the 2,4′-isomer and mixtures thereof, m- and p-phenylene diisocyanates, chlorophenylene diisocyanates, α,α′-xylylene diisocyanate, 2,4-, 2,6-toluene diisocyanate, and mixtures thereof, tolidine diisocyanate, hexamethylene diisocyanate, decamethylene diisocyanate, 1,5-naphthalene diisocyanate, isophorone diisocyanate, and 1,4-bis(α-isocyanatoisopropyl)-benzene; cycloaliphatic diisocyanates such as methylenebis(cyclohexyl isocyanate) including the 4,4′-isomer, the 2,4′-isomer and mixtures thereof, and all the geometric isomers thereof including trans/trans, cis/trans, cis/cis and mixtures thereof, cyclohexylene diisocyanates (1,2-; 1,3-; or 1,4-), 1-methyl-2,5-cyclohexylene diisocyanate, 1-methyl-2,4-cyclohexylene diisocyanate, 1-methyl-2,6-cyclohexylene diisocyanate, 4,4′-isopropylidenebis(cyclohexyl isocyanate), 4,4′-diisocyanatodicyclohexyl, and all geometric isomers and mixtures thereof. Also included are the modified forms of methylenebis(phenyl isocyanate). By the latter are meant those forms of methylenebis(phenyl isocyanate) which have been treated to render them stable liquids at ambient temperature (circa 20°C). Such products include those which have been reacted with a minor amount (up to 0.2 equivalents per equivalent of polyisocyanate) of an aliphatic glycol or a mixture of aliphatic glycols such as the modified methylenebis(phenyl isocyanates) described in U.S. Patents 3,394,164; 3,644,457; 3,883,571; 4,031,026; 4,115,429; 4,118,411; and 4,299,347. The modified methylenebis(phenyl isocyanates) also include those which have been treated so as to convert a minor proportion of the diisocyanate to the corresponding carbodiimide which then interacts with further diisocyanate to form uretone-imine groups, the resulting product being a stable liquid at ambient temperatures as described, for example, in U. S. Patent 3,384,653. Mixtures of any of the above-named polyisocyanates can be employed if desired. It is possible to introduce into the polyisocyanate component employed in the reaction minor amounts (up to 20 percent by weight) of polymethylene polyphenyl polyisocyanates. The latter are mixtures containing from 20 to 90 percent by weight of methylenebis(phenyl isocyanate) the remainder of the mixture being polymethylene polyphenyl polyisocyanates of functionality higher than 2.0. Such polyisocyanates and methods for their preparation are well-known in the art; see, for example, U.S. Patent 2,683,730; 2,950,263; 3,012,008, and 3,097,191. These polyisocyanates are also available in various modified forms. One such form comprises a polymethylene polyphenyl polyisocyanate as above which has been subjected to heat treatment, generally at temperatures from 150°C to 300°C, until the viscosity (at 25°C) has been increased to a value within the range of 800 to 1,500 centipoises. Another modified polymethylene polyphenyl polyisocyanate is one which has been treated with minor amounts of an epoxide to reduce the acidity thereof in accordance with U.S. Patent 3,793,362. However, the use of such polymethylene polyphenyl polyisocyanates should be tested with the specific formulations in hand to ensure the resulting polyurethane is thermoplastic. Mixtures of any of the above isocyanates can also be employed.

Preferably the diisocyanates belong to the aliphatic and cycloaliphatic diisocyanates exemplified above. A particularly preferred diisocyanate is the methylenebis(cyclohexyl isocyanate) including its various isomer forms and mixtures thereof.

Generally speaking, the overall proportions of the components (a), (b), (c), and (d) are such that the overall ratio of isocyanate groups to active hydrogen groups falls in the range of from 0.90:1 to 1.15:1, and, preferably, from 0.95:1 to 1.10:1.

The compositions of the invention can also incorporate various additives such as fillers, fiber glass, and the like, antioxidants, pigments, fire retardants, plasticizers, reinforcing agents, and wax lubricants, commonly employed in the art in such compositions.

The compositions of the invention can be obtained in both cellular and non-cellular form. The cellular compositions of the invention would be classified as micro-cellular and can be prepared by methods well recognized in the art. For example, a blowing agent can be incorporated in the reaction mixture employed in the preparation of the compounds described above. Preferably, the blowing agent is a volatile organic liquid which is vaporized during the exothermic reaction which takes place. Examples of organic liquids which can be used as blowing agents are inert liquids, i.e. liquids which do not react chemically with any of the components of the reaction mixture and which do not interfere in any way with the desired course of the reaction, and having boiling points in the range of -20°C to 110°C. Illustrative of such liquids are butane, hexane, heptane, methylene chloride, chloroform, monofluorotrichloromethane, chlorodifluoromethane, and dichlorodifluoromethane.

The thermoplastic compositions of the invention which may be prepared and isolated in flake, pellet or like form can be subsequently molded by injection molding and like techniques. It is also possible to prepare cellular compositions therefrom by blowing with inert gases such as nitrogen, air, and carbon dioxide during the final molding process using techniques well-known in the art for thermoplastic materials such as nylon, polycarbonate, polystyrene, and polyethylene.

In respect of the non-cellular polyurethanes of the invention, they are characterized by having a broad range of physical properties ranging from soft materials to very hard plastics. That is to say, by varying the amount and type of the difunctional component (c) in relation to variations in the polyol molecular weight and proportions, it is possible to obtain thermoplastic polyurethanes having a broad range of properties. The tensile modulus values can be made to fall within a range of from 1406 kg/cm$^2$ to well in excess of 14,060 kg/cm$^2$. This increase can be accomplished without having to increase the conventional extender component to the levels called for by the prior art.

The thermoplastic polyurethanes find utility in the extrusion of all types of profiles including sheets, films, tubing and molded articles such as gaskets, equipment housings, automobile body parts (high modulus products), and aircraft canopies; the softer products find application in anti-lacerant glass manufacture, seals, and manufacture of breathable fabrics.

The following examples describe the manner and process of making and using the invention and set forth the best mode contemplated by the inventors of carrying out the invention but are not to be construed as limiting.

Example 1

The following experiment describes the preparation of five polyurethanes (Samples 1 to 5) in accordance with the present invention and two polyurethanes (Comparison 1 and 2) not so in accordance. The same general procedure is employed for the preparation of all seven samples with the only variation being the proportions of organic polyol and diol component (c) employed in each sample. All other ingredients are kept proportionately constant throughout. The actual ingredient proportions by weight for all samples are chosen so that the combined molar proportion of polyol plus component (c) are taken as unity along with molar proportions of diisocyanate and diol extender of 4.12 and 3.0, respectively. Accordingly, the polyol : diisocyanate : extender ratios are constantly 1 : 4.12 : 3.0. The isocyanate to hydroxyl ratio is 1.03. It is the mixture constituting the molar proportion of polyol which is varied between samples 1 to 5 and comparison 1 and comparison 2 as set forth in Table I. The variations are expressed both in molar proportions of polyol and component (c) and in terms of their respective weight percent contents (shown in parenthesis) based on the total polyol, diisocyanate, and extender weight.

The following specific preparative description is for sample 5 wherein the polyol and component (c) contents are each proportionately 0.5 molar. All other preparations are identical except for the appropriate variations in concentration of polyol and component (c). A one liter three-necked flask equipped with a thermometer, stirrer, reflux condenser and vacuum take-off is charged with 249.3 g (0.125 mole) of a polyethyleneoxy capped polypropyleneoxy diol having a number average molecular weight of 2,000 and an EO content of 11 percent and is heated to 135°C. A 59.5 g (0.125 mole) sample of component (c) which is the diol product obtained from the reaction of a 2 molar proportion of 1,4-cyclohexane dimethanol with dodecanedioic acid (product molecular weight by neutral equivalent titration = 476) (material supplied under the trade name of K-Flex by King Industries, Norwalk, CT) is added to the flask and the mixture heated again up to 135°C. A vacuum is slowly applied during stirring and the clear solution is degassed and dried at 135°C under a vacuum below 800 millitorr for 1 hour.

The flask and contents are cooled to about 65°C whereupon 269.7 g (1.03 moles) of 4,4′-methylenebis-(cyclohexylisocyanate) is added along with 32 μl of stannous octoate. The mixture is stirred rapidly for 0.5 hour with an exotherm somewhat in excess of 65°C and a 130 g sample of the isocyanate prepolymer removed to determine isocyanate titre. The removal of this proportion of prepolymer reduces the actual amounts of polyol, K-Flex, and diisocyanate below the proportions noted above so that the recalculated proportions remaining in the prepolymer becomes polyol = 0.097 mole; K-Flex = 0.097 mole; and diisocyanate = 0.798 mole.

The isocyanate terminated prepolymer is cooled to 30°C followed by the addition of 52.4 g (0.58 mole) of 1,4-butanediol extender and 225 μl of stannous octoate during rapid stirring. An exotherm to 100°C occurs and when the temperature reaches 50.6°C, the viscous yellow polymer is quickly poured into a polypropylene tray which is placed in a 100°C oven overnight for curing. Upon removal from the oven, the polymer sample 5 is a clear, yellow, non-tacky (even at 100°C) product. The sample is allowed to stand at ambient temperature (20°C) for at least 14 days before being subjected to the physical tests set forth in Table I. The other polymer samples differ in the proportions of the polyol and K-Flex components in accordance with the values set forth in Table I.

Comparison samples 1 and 2 are simply the polyurethanes wherein the molar proportions of the K-Flex has fallen to 0.4 and 0.3 respectively. These values are equivalent to a 7 and 5 weight percent proportion but the polyol levels have risen to 44 and 48 weight percent and neither their tear strengths nor tensile modulus have reached threshold values of at least 70.3 kg/cm$^2$ and 1406 kg/cm$^2$ respectively. Contrastingly, beginning at the 50/50 ratio of polyol to K-Flex the tear strength moves upward in a larger increment over comparison 1 as compared with the increment of comparison 1 over comparison 2 and the value exceeds 70.3 kg/cm$^2$. More notably, the tensile modulus begins to dramatically increase even though the increase in K-Flex represents only a 0.1 molar concentration increase and a very minor increase by weight. As the K-Flex proportion increases towards the 0.9 molar (22 weight percent) level the tensile modulus increases rapidly. A noteworthy observation here is the extender/polyol equivalent ratio which is increasing only from about 6 to 30 to achieve such high modulus values. It will be noted that U.S. Patent 4,376,834 cited supra call for these ratios to be much higher, upwards of 60, in order to reach similar modulus values.

7

TABLE I

| Sample | 1 | 2 | 3 | 4 | 5 | Comp. 1 | Comp. 2 |
|---|---|---|---|---|---|---|---|
| Moles Polyol | 0.1 | 0.2 | 0.3 | 0.4 | 0.5 | 0.6 | 0.7 |
| (wt. %) | (10) | (19) | (26) | (33) | (38.6) | (44) | (48) |
| Moles Component (c) | 0.9 | 0.8 | 0.7 | 0.6 | 0.5 | 0.4 | 0.3 |
| (wt. %) | (22) | (18) | (15) | (12) | (9) | (7) | (5) |
| Extender/Polyol (equiv. ratio) | 30 | 15 | 10 | 7.5 | 6 | 5 | 4.3 |
| Physical Properties: | | | | | | | |
| Tensile (kg/cm$^2$) | 488 | 398 | 370 | 350 | 347 | 344 | 274 |
| Elongation (%) | 27 | 70 | 137 | 279 | 355 | 478 | 579 |
| Tensile Modulus (kg/cm$^2$) | 13,478 | 9268 | 5254 | 2677 | 1722 | 989 | 517 |
| 'Tear Str. (kN/m) | -- | -- | 305 | 241 | 194 | 172 | 166 |
| Footnote | | | | | | | |

'Tear strength (in kN/m) determined in accordance with ASTM Test Method D624.

## Example 2

Using exactly the procedure and reactants described in Example 1 (except as noted below) including the overall polyol: diisocyanate: extender ratios of 1 : 4.12 : 3.0, a series of four polyurethane samples is prepared. The split in the one molar proportion in this series is 0.4 molar in respect of the 2,000 molecular weight polyethyleneoxy-polypropyleneoxy glycol and 0.6 molar in respect of the component (c). The series of polyurethane samples differ only in the molecular weight of the 0.6 molar proportion of polyethylene glycol (PEG) component (c) employed as set forth in Table II. Sample 6 in accordance with the present invention uses a PEG having a molecular weight of 400, whereas the three comparison samples 3 to 5 use PEGs falling above and below this number average value.

A comparison of sample properties set forth in Table II shows the criticality of the molecular weight of component (c) which must be employed. This criticality can influence more than one particular physical property. For example, comparison samples 3 and 4 with PEG components of 200 and 300 molecular weight show dramatically inferior permanent set values in comparison to sample 6, while comparison 5 is not acceptable in spite of lower permanent set because its modulus value is too low. Accordingly, within a given ratio of polyol to component (c), the properties of the polyurethanes of the present invention can be altered effectively by the molecular weight of this component all within a relatively low extender to polyol content.

EP 0 335 276 A1

TABLE II

| Sample | Comp. 3 | Comp. 4 | 6 | Comp. 5 |
|---|---|---|---|---|
| 0.4 molar Polyol wt % | 35.2 | 34.3 | 33.5 | 32 |
| 0.6 molar Component (c): | | | | |
| PEG 200 (wt. %)<br>PEG 300 (wt. %)<br>PEG 400 (wt. %)<br>PEG 600 (wt. %) | 5.3 | 7.7 | 10 | 14.3 |
| Physical Properties: | | | | |
| Tensile str. (kg/cm$^2$)<br>Elongation (%)<br>Tensile Modulus (kg/cm$^2$)<br>Tear str. (kg/cm$^2$)<br>[1]Permanent Set (%) | 415<br>389<br>2561<br>90<br>108 | 363<br>390<br>199<br>83<br>95.8 | 367<br>453<br>1432<br>84<br>37.5 | 391<br>523<br>765<br>71<br>12.5 |
| Footnote | | | | |

[1]Permanent Set is a measure of recovery or lack thereof after a sample has been compressed a measured amount and tested for recovery in accordance with ASTM D395. The smaller the permanent set percentage, the better the polymer.

## Claims

1. A thermoplastic polyurethane characterized by the product of reaction of
(a) an organic polyisocyanate;
(b) an organic polyol having a molecular weight from 1,000 to 12,000;
(c) a difunctional isocyanate reactive compound having a molecular weight of from 350 to 550; and
(d) at least one chain extender having a functionality from 2 to 3;
said polyurethane being further characterized in that the proportions by weight of said polyol (b) and said difunctional compound (c) are from 4 to 40 and from 5 to 30 percent respectively based on the combined weights of said (a), (b), (c), and (d) and provided the proportions of said four ingredients are such that the overall ratio of isocyanate groups to active hydrogen groups falls in the range of from 0.90:1 to 1.15:1.

2. A thermoplastic polyurethane according to Claim 1 wherein said polyisocyanate is selected from aliphatic diisocyanates, cycloaliphatic diisocyanates, and mixtures thereof.

3. A thermoplastic polyurethane according to Claim 1 wherein said difunctional isocyanate reactive compound (c) comprises a diol having a molecular weight of from 400 to 500.

4. A thermoplastic polyurethane according to any one of Claims 1, 2 or 3 wherein said (c) comprises a polyalkyleneoxy glycol.

5. A thermoplastic polyurethane according to any one of Claims 1, 3, or 3 wherein said (c) comprises a polyester diol.

6. A thermoplastic polyurethane according to any one of Claims 1, 2, 3, 4 or 5 wherein said extender (d) comprises an aliphatic diol.

7. A thermoplastic polyurethane according to Claim 1 wherein (a) is a cycloaliphatic diisocyanate; (b) is an organic polyol having a functionality of from 2 to 4 and a molecular weight of from 1,500 to 6,000; (c) is a diol having a molecular weight of from 400 to 500; and (d) is at least one aliphatic diol chain extender; said polyurethane being further characterized in that the proportions by weight of said polyol (b) and said diol (c) are from 10 to 35 and from 10 to 25 percent, respectively based on the combined weights of said (a), (b), (c), and (d) and provided the proportions of said four ingredients are such that the overall ratio of isocyanate groups to active hydrogen groups falls in the range of from 0.95:1 to 1.10:1.

8. A thermoplastic polyurethane according to Claim 7 wherein said diisocyanate is 4,4'-methylenebis-(cyclohexyl isocyanate), said polyol has a functionality of 2 and a molecular weight of from 1,500 to 3,000 and extender (d) comprises 1,4-butanediol.

9

9. A thermoplastic polyurethane according to Claim 8 wherein said diol (c) comprises a polyethyleneoxy glycol of molecular weight 400.

10. A thermoplastic polyurethane according to Claim 8 wherein said diol (c) comprises a polyester diol of molecular weight from 450 to 495 said polyester diol having been prepared from dodecanedioic acid and at least two molar equivalents of 1,4-cyclohexane dimethanol.

| | European Patent Office | **EUROPEAN SEARCH REPORT** | Application number |

**DOCUMENTS CONSIDERED TO BE RELEVANT**  |  EP 89105304.3

| Category | Citation of document with indication. where appropriate, of relevant passages | Relevant to claim | CLASSIFICATION OF THE APPLICATION (Int. Cl.4) |
|---|---|---|---|
| X | <u>DE - A1 - 3 629 630</u> (BASF AG) * Claims; column 4, lines 27-51; column 7, lines 18-62; column 5, line 33 - column 6, line 11; column 12, lines 29-40 * -- | 1-9 | C 08 G 18/65 C 08 G 18/66 |
| X | <u>US - A - 4 575 518</u> (RASSHOFER et al.) * Claims; column 6, line 55 - column 8, line 5; column 9, lines 56-63; column 17, lines 8-18 * -- | 1-9 | |
| X | <u>US - A - 4 420 601</u> (KURODA et al.) * Claims; column 1, line 61 - column 3, line 38 * -- | 1-7 | |
| X | <u>US - E - 31 671</u> (BONK et al.) * Claims * ---- | 1,3,5, 6 | TECHNICAL FIELDS SEARCHED (Int. Cl.4) C 08 G 18/00 |

The present search report has been drawn up for all claims

| Place of search | Date of completion of the search | Examiner |
|---|---|---|
| VIENNA | 06-06-1989 | WEIGERSTORFER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on. or after the filing date
D : document cited in the application
L : document cited for other reasons

& : member of the same patent family. corresponding document

EPO Form 1503 03 82